# EUROPEAN PATENT APPLICATION

(11) **EP 4 561 092 A1**
(43) Date of publication of application: **28.05.2025**
(21) Application number: 23307052.3
(22) Date of filing: 24.11.2023
(51) Int. Cl.: H04N 23/957

(54) **FOCUS PARAMETER STORING AND SIGNALING**

(71) Applicant: Beijing Xiaomi Mobile Software Co., Ltd., Beijing 100085 (CN)
(72) Inventor: THOMAS, Emmanuel, 2611WD Delft (NL); POTETSIANAKIS, Emmanouil, 2563 TZ The Hague (NL)
(74) Representative: RVDB Rennes

(57) **Abstract**

The present disclosure further relate to a method of displaying a viewable two-dimensional image on a two-dimensional viewing device, said viewable two-dimensional image being derived from refocusable images data read from a data file or a data stream with a focus indicated by at least one focus parameter read from the data file or the data stream.

## Description

### FIELD

The present disclosure generally relates to storing and signaling focus parameters relative to a still image or video frame of a video. Particularly, but not exclusively, the present disclosure concerns storing in a data file or a data stream refocusable images data in relation with focus parameters.

### BACKGROUND

Capturing image (still image or video frame) of a real-word scene is a 200-year-old technical field since the invention of photography around 1822. Following still images, the technology evolved sufficiently to capture a series of still images (video frames) which constitutes motion images or simply called videos.

Whether the content captured is still image or video frames, the physical principle remains the same, that is the creation of an image of the scene via an optical system wherein the created image is captured by a sensor sensitive to the light intensity (paper or electronic sensor). Conventionally, this optical system is also configured for a given focal plane wherein objects in this plane (or close enough to it) appear sharp on the formed image, either close to the camera (e.g., portrait of people) or to an infinite distance (e.g., landscape). Consequently, objects away from the focal plane appear to be blurry on the formed image, wherein the level of blur is related to their distance from the focal plane. Note that the term focal plane is traditionally used in photography as such, but more refined definition exists in the technical fields of optics.

The depth of field (DOF) is the distance between the nearest and the furthest objects that are in acceptably sharp focus in an image captured with a camera.

While there exist different configurations of an optical system to adjust the depth of field and the location of the focal plane, the image generated by this optical system is associated with a given combination of both.

This is where the concept of light field capture comes in. The light field is a vector function that describes the amount of light flowing in every direction through every point in space. The space of all possible light rays is given by the five-dimensional plenoptic function, and the magnitude of each ray is given by its radiance. When capturing light field data, a light field camera conceptually captures all the light rays passing through a given volume in front of the camera as opposed to a conventional pinhole camera which selects (filtering) of the rays of lights passing in this volume.

There are various techniques to acquire light field data. One typical technique is to record a scene with an image pixel array of a light field acquisition apparatus (for example, a light field camera comprising a main lens, microlens array and a photo sensor) to capture the light rays coming from all the directions (Levoy, Marc, and Pat Hanrahan. "Light field rendering." In Seminal Graphics Papers: Pushing the Boundaries, Volume 2, pp. 441-452. 2023). As a result, a light field image/video is typically made up of light field data stored in the image pixel array that can be considered as being an array of sub-contents of the scene.

Notably, the term "light field data" means data representing the lighting in the scene including, for example, a set of values, where each value may represent the light traveling along each geometric light ray (or bundle of rays approximating a geometric light ray) within a corresponding set of light rays. In a specific exemplary embodiment, light field data may represent 2D image data reads from the image pixel array. In another exemplary embodiment, light field data may mean a function L(x,y,u,v) where L is the amount of light (e.g. radiance) traveling along a ray (x,y,u,v) that passes through the optical aperture of the camera lens at 2D position (u,v) and the sensor at 2D position (x,y). In yet another exemplary embodiment, light field data may mean data encoded and/or recorded in the frequency spectrum of the light field. In yet another exemplary embodiment, light field data may mean a collection of images focused at different depths. In yet another exemplary embodiment, light field data may mean a collection of images from different viewpoints of the scene.

Notably, the foregoing are intended only as examples of light field data, and light field data may in certain embodiments include any collection of images or lighting data that may be used to generate, derive, calculate, estimate and/or determine a full or partial representation or approximation of the above light field function L(x,y,u,v).

### SUMMARY

The following section presents a simplified summary of the at least one exemplary embodiment in order to provide a basic understanding of some aspects of the present disclosure. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present disclosure, there is provided a method of storing data representing an image in a data file or in a data stream comprising:
- obtaining refocusable images data captured from an acquisition apparatus configured to capture the refocusable images data with at least one first focus, the image being derived from the captured refocusable images data with a second focus different from any focus of the at least one first focus ;
- writing data representing the refocusable images data in the data file or the data stream ;
- obtaining at least one focus parameter indicating the second focus ; and
- writing in the data file or the data stream, data representing the at least one focus parameter.

According to a second aspect of the present disclosure, there is provided a method of deriving an image from refocusable images data, the method comprising:
- reading data representing the refocusable images data from a data file or a data stream, said refocusable images data being captured from an acquisition apparatus configured with at least one first focus ;
- reading from the data file or the data stream data representing at least one focus parameter indicating a second focus different from any of the at least one first focus ; and
- deriving the image from the refocusable images data with the second focus.

In one exemplary embodiment, the at least one first focus and the second focus are based on a location of a focal plane and a depth of field.

In one exemplary embodiment, the at least one focus parameter is a focus distance.

In one exemplary embodiment, the at least one focus parameter is an aperture change of acquisition apparatus in a number of stops, said aperture change being represented by a ratio of two values.

In one exemplary embodiment, the at least one focus parameter indicates a focus area of the image.

In one exemplary embodiment, the at least one focus parameter indicates a focus point of the focus area of the image.

In one exemplary embodiment, the at least one focus parameter indicates relative coordinates of the focus point to the dimension of the image.

In one exemplary embodiment, the image being a video frame of a video and an additional parameter is written/read in/from the data file or the data stream, the additional parameter indicating whether the at least one focus parameter associated with a video frame of the video is used or not to indicate the second focus.

In one exemplary embodiment, the image being a video frame of a video, and wherein an additional parameter is written/read in/from the data file or data stream to indicate the at least one focus parameter indicating the second focus used to derive the image is derived by interpolation at least one focus parameter indicating a focus used to derive another image.

According to a third aspect of the present disclosure, there is provided a data file or a data stream formatted to include refocusable images data and at least one focus parameter indicating a focus obtained from a method of the first aspect of the present disclosure.

In one exemplary embodiment, the data file is a ISOBMFF formatted file that conforms to the standard ISO/IEC 14496-12 or one of its derivatives.

In one exemplary embodiment, the data file is a video bitstream or may comprise a supplemental enhancement information message.

According to a fourth aspect, there is provided an apparatus comprises means for performing one of the method of the first or second aspects of the present disclosure.

According to a fifth aspect, there is provided a computer program product including instructions which, when the program is executed by one or more processors, causes the one or more processors to carry out a method of the first, second and/or third aspects.

According to a sixth aspect, there is provided a non-transitory storage medium carrying instructions of program code for executing a method a method of the first, second and/or third aspects.

The specific nature of at least one of the exemplary embodiments as well as other objects, advantages, features and uses of said at least one of exemplary embodiments will become even more apparent from the following description of examples taken in conjunction with the accompanying drawings.

### BRIEF DESCRIPTION OF THE DRAWINGS

Reference will now be made, by way of example, to the accompanying drawings which show exemplary embodiments of the present disclosure, and in which:
**Figure 1** shows a schematic block diagram of steps of a method 100 of storing in a data file or a data stream data representing a viewable two-dimensional image which can be capable of is designed for being viewed on two-dimensional viewing devices, in accordance with at least one exemplary embodiment of the present disclosure;
**Figure 2** shows a schematic block diagram of steps of a method 200 of storing in a data file or a data stream a viewable two-dimensional video which can be capable of or is designed for being viewed on two-dimensional viewing devices, in accordance with at least one exemplary embodiment of the present disclosure;
**Figure 3** shows a schematic block diagram of steps of a method 300 of displaying a two-dimensional image on a two-dimensional viewing device, in accordance with at least one exemplary embodiment of the present disclosure;
**Figure 4** shows a schematic block diagram of steps of a method 400 of displaying a two-dimensional video on a two-dimensional viewing device, in accordance with at least one exemplary embodiment of the present disclosure;
**Figure 5** shows schematically an overview of a ISOBMFF formatted file for storing the refocusable images data and the at least one focus parameter corresponding to static visual content in accordance with an exemplary embodiment;
**Figure 6** shows schematically an overview of a ISOBMFF formatted file for storing the refocusable images data and the at least one focus parameter corresponding to dynamic visual content in accordance with an exemplary embodiment;
**Figure 7** shows schematically a payload of a **recommended_focus_parameter** SEI message carrying at least one focus parameter in accordance with an exemplary embodiment;
**Figure 8a****-d** shows an example of a use case and user interface using the present invention in accordance with an exemplary embodiment;
**Figure 9** shows a schematic block diagram illustrating an example of a system in which various aspects and exemplary embodiments are implemented.

Similar or same elements are referenced with the same reference numbers.

### DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present disclosure is intended to cover all modifications, equivalents, and alternatives falling within the spirit and scope of the present disclosure.

In one aspect, the present disclosure is directed to, among other things, systems for and methods of acquiring, generating, manipulating and/or editing (for example, focusing or refocusing) refocusable images data.

Refocusable images data means image data that are captured by an acquisition apparatus configured to capture image data with a given focus configuration, i.e. with a specific location of a focal plane and a specific depth of field. Refocusable images data may be re-focused after acquisition i.e. viewable two-dimensional (2D) images, i.e. 2D image or 2D video frame which is capable of or designed for viewing on 2D viewing devices, can be derived from the captured refocusable images data according to a location of the focal plane that may be different of the one or more specific locations of the focal planes used along the capture and/or a depth of field that may be different of the one or more specific depths of field used along the capture.

In one exemplary embodiment, refocusable images data are light field data acquired or obtained, for example, via a light field acquisition apparatus.

Refocusable images data can be used in different scenarios.

For example, post-production in the context of cinematography may mean the work and/or effort expended to place one or more viewable 2D video frames in a predetermined, desired and/ or final form (for example, for viewing) after the acquisition or recording phases.

As another exemple, a scene may also be captured by an end-user via a capture device, e.g. a smartphone. As conventionally performed, the end-user can adjust the configuration of the camera of the capture device in order to define a focus in the scene. For example, the focus may be made on a person in the scene and the resulting focus would appear on the capture device. The user may thus save this captured image/video in a data file. When the capture device is configured to capture refocusable images data, the user may further change the focus (adjust the position of the focus plane and/or the depth of field in the scene) after the capture and decide for instance to adjust the focus on another object, thus resulting in a different rendering of the scene from the same capture refocusable images data.

In the US patent n° US10298834B2, Pitts discloses a method to generate a viewable 2D image/video with a particular focus configuration from refocusable images data. The particular focus configuration is based on at least one focus parameter. A focus parameter may indicate a particular location of the focal plane and/or a particular depth of field. The particular focus configuration may be possibly different than the one recorded in the refocusable light field images data.

The at least one focus parameter may be selected by an end-user, deciding which parts of the scene focus on. For example, an end-user input which is indicative of an object or area in the scene may be received from a user interface. The at least one focus parameter may also be determined based on automatic focusing techniques such as object tracking, saliency detection, etc.

No matter which technique is used, Pitts teaches that the output of his method is a viewable 2D image/video with a particular focus configuration that may be different of the focus configuration used along the capture of the refocusable images data. This viewable 2D image/video being a video sequence in the conventional sense, that is with a "baked-in" focus configuration like those captured by conventional camera.

Pitts' method exhibits several disadvantages. The fact that the refocusing may rely on an end-user implies that the result of the refocusing may be not consistent across multiple devices consuming such refocusable images data since it will depend on the user choices. As a content creator (e.g. movies, series) distributing such content, it is of the utmost importance that every end-user sees the same image/video with the same focus configuration to provide a consistent experience. Especially because those focus configurations drive the attention of the viewer and essential pieces for the storyline in the images/videos may be missed by the viewer if the focus is improperly done.

Also, in the context of recording such light video on a smartphone, the user may want to have saved a certain focus configuration for the recorded clip. With Pitts, the user would have to generate a new image/video in addition to the refocusable images data which will increase storing cost unnecessarily on the device.

In another cases, a content creator may want to offer different focus configurations for the same content in order to emphasise on different aspects of the same story. With Pitts, this will imply to generate one video for each version which requires more computation power for encoding the image/video and storage/transmission cost for those images/videos.

At least one exemplary embodiment of the present disclosure has been devised with the foregoing in mind.

An image may be a video frame belonging to a video, i.e. a temporal sequence of video frames. A temporal relationship exists between the video frames of a video.

An image may also be a still image.

An image comprises at least one component (also called channel) determined by a specific picture/video format which specifies all information relative to samples values and all information which may be used by a display unit and/or any other device to display and/or to decode image data related to said image in order to generate pixel values.

An image comprises at least one component usually expressed in the shape of an 2D array of samples.

A monochrome image comprises a single component and a color image (also denoted texture image) may comprise three components.

For example, a color image may comprise a luma (or luminance) component and two chroma components when the image/video format is the well-known (Y,Cb,Cr) format or may comprise three color components (one for Red, one for Green and one for Blue) when the image/video format is the well-known (R,G,B) format. The image/video format may also be the well-known (R,G,B,D) forma (D for depth information).

An image may also be an infra-red image.

Each component of an image may comprise a number of samples relative to a number of pixels of a display screen on which the image is intended to be displayed. For instance, the number of samples comprised in a component may be the same as, or a multiple (or fraction) of, a number of pixels of a displaying surface on which the image is intended to be displayed.

The number of samples comprised in a component may also be a multiple (or fraction) of a number of samples comprised in another component of a same image.

For example, in the case of an image/video format comprising a luma component and two chroma components like the (Y,Cb,Cr) format, dependent on the color format considered, the chroma component may contain half the number of samples in width and/or height, relative to the luma component.

A sample is the smallest visual information unit of a component composing an image. A sample value may be, for example a luma or chroma value or a colour value of the red, green or blue component of a (R, G, B) format.

A pixel value of a displaying surface may be represented by one sample for monochrome image and by multiple co-located samples for color image. Co-located samples associated with a pixel mean samples corresponding to the location of a pixel in the display screen.

It is common to consider an image as being a set of pixel values, each pixel being represented by at least one sample.

Embodiments of the present disclosure relate to a method of storing in a data file or in a data stream data representing a viewable two-dimensional image by storing in the data file or in the data stream data representing refocusable images data captured from an acquisition apparatus configured with at least one first focus, and data representing at least one focus parameter indicating a second focus of the viewable two-dimensional image that may be different of the at least one first focus.

Embodiments of the present disclosure further relate to a method of displaying a viewable two-dimensional image on a two-dimensional viewing device, said viewable two-dimensional image being derived from refocusable images data read from a data file or a data stream with a focus indicated by at least one focus parameter read from the data file or the data stream.

These embodiments of the present disclosure enable the storage and carriage of the at least one focus parameter along with the refocusable images data. This way, the user does not have to refocus an image every time the image is displayed.

Also, these embodiments of the present disclosure enable the exchange of particular viewable 2D images derived from particular focuses with other end-users without transmitting said viewable 2D images.

Also, these embodiments of the present disclosure ensure that the result of the refocusing is consistent across multiple devices consuming such refocusable images data since it does not depend on the end-user choices.

These embodiments further allow saving certain focus configurations without additional significant additional storing memory and processing or bandwidth by writing in the data file or the data stream at least one focus parameter indicating a certain location of the focal plane and the certain depth of field of each of said certain focus configuration.

Embodiments of the present disclosure are often described in the context of a light field capture system or device, which acquire or obtain refocusable images data and/or processes or methods of acquiring, generating, manipulating and/or editing such refocusable images data, it should be clear that the present disclosure is applicable to other systems, devices, processes and/or methods of acquiring, generating, manipulating and/or editing refocusable images data. The refocusable images data acquisition system may be systems/devices aimed at cinema professionals, including complete focus control after the video is captured, and/or systems/devices directed to non-professionals including, for example, such devices as digital single-lens reflex camera for high-end consumers or consumer video acquisition systems that perform automatic or semi-automatic focus adjustment controls and circuitry during the acquisition of the image/video.

For example, the embodiments of the present disclosure may be implemented in conjunction with light field data acquisition devices (for example, cameras) and/or systems to generate, manipulate and/or edit light field data (for example, adjust, select, define and/or redefine the focus and/or depth of field after initial acquisition, capture and/or recording of the light field data of, for example, a scene.

Embodiments of the present disclosure generally further relate to producing/writing and possibly storing the refocusable images data and the at least one focus parameter as encapsulated data in a media container or transmitting them into a bitstream and reading/accessing those encapsulated data from a media container or decoding them from a bitstream. A media container may be a data structure in a bitstream (e.g. a video bitstream), a network packet or a binary file.

Encapsulation is a process of wrapping media representation within a media container. Binary structures such as binary files are one instantiation of a media container. Binary files define the syntax for parsing and understanding the structures of files. They have a start and an end and typically holds self-contained information. Binary files are generally transported and stored as a whole. However, binary files may be further segmented into smaller file units for the purpose of transmission over a network such as using HTTP-based transport. Popular standards for HTTP-based streaming are Apple HTTP Live Streaming (IETF Internet draft) and MPEG-DASH (Dynamic Adaptive Streaming over HTTP, ISO/IEC 23009-1).

In the following, exemplary embodiments of the present disclosure are described by considering encapsulation of refocusable images data and at least one focus parameter into a data file based on an instantiation of a binary file, called ISOBMFF file as defined in the standard ISO/IEC 14496-12. But other file instantiation may be used without any limit of the scope of the present disclosure. Basically, ISOBMFF defines boxes to organize the data in a binary form. A file is then composed of a series of boxes. Each box has a type coded on 4 bytes and a size. The content of each box is then specified by either the ISOBMFF specification or by one of its derivative specification such as for example the High Efficiency Image File Format (HEIF) (ISO/IEC 23008-12) (Wikipedia contributors, "High Efficiency Image File Format," *Wikipedia, The Free*

*Encyclopedia,* https://en.wikipedia.org/w/index.php?title=High_Efficiency_Ima ge_File_Format&oldid=1177557071 (accessed September 29, 2023).

When transmitting media data, a real-time protocol may also be chosen in order to meet the requirement of a targeted application. This is the case for instance for video conversional applications. In this case, bitstreams comprising data representing refocusable images data and at least one focus parameter are typically encapsulated into transport packets (containers) and not as a file structure. For example, Real-time Transport Protocol (RTP) (RFC 3550) could be used. But other transport packet encapsulation may be used without any limit of the scope of the present disclosure.

Exemplary embodiments of a transport packet encapsulation could also be deduced from the following described exemplary embodiments of a file encapsulation by considering a transport standard as instantiation of a transport packet encapsulation rather than the described file encapsulation.

The at least one exemplary embodiment may apply to pre-existing or future-developed, and extensions of standards and recommendations. Unless indicated otherwise, or technically precluded, the aspects described in the present disclosure may be used individually or in combination.

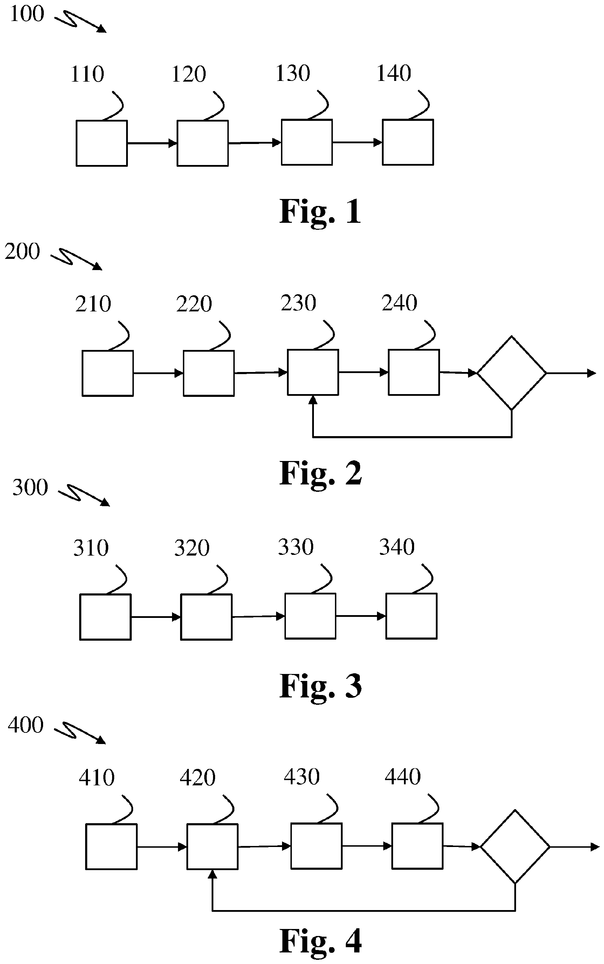

**Figure 1** shows a schematic block diagram of steps of a method 100 of storing in a data file or a data stream data representing a viewable two-dimensional image which can be capable of or is designed for being viewed on two-dimensional viewing devices, in accordance with at least one exemplary embodiment of the present disclosure.

At block 110, refocusable images data is obtained. The refocusable images data may be obtained from an acquisition apparatus configured to capture the refocusable images data with at least one first focus. The refocusable images and the at least one first focus may also be obtained from another apparatus.

At block 120, data representing the refocusable image data is written in the data file or the data stream.

In one exemplary embodiment of blocks 110 and 120, the refocusable images data and the at least one focus parameter are obtained by the above Pitts' method.

At block 130, at least one focus parameter indicating a second focus is obtained.

The viewable two-dimensional image can be capable of or is designed for being viewed on two-dimensional viewing devices can then be derived from the captured refocusable images data with the second focus different from any focus of the at least one first focus used for capturing the refocusable images data.

At block 140, data representing the at least one focus parameter is written in the data file or the data stream.

**Figure 2** shows a schematic block diagram of steps of a method 200 of storing in the data file or the data stream data representing a viewable two-dimensional video which can be capable of is designed for being viewed on two-dimensional viewing devices, in accordance with at least one exemplary embodiment of the present disclosure.

The viewable two-dimensional video comprises multiple viewable video frames that may be capable of or designed for viewing with different focuses indicated by different focus parameters.

At block 210, refocusable images data is obtained. The refocusable images data may be obtained from an acquisition apparatus configured to capture the refocusable images data with at least one first focus. The refocusable images and the at least one first focus may also be obtained from another apparatus.

At block 220, data representing the refocusable images data is written in the data file or the data stream.

In one exemplary embodiment of blocks 210 and 220, the refocusable images data and the at least one focus parameter are obtained by the above Pitts' method.

At block 230, at least one focus parameter associated with a current viewable video frame is obtained. The at least one focus parameter indicates a second focus e.g. associated with each video frame.

A viewable two-dimensional video frame which can be capable of or is designed for being viewed on two-dimensional viewing devices can then be then derived from the captured refocusable images data with a second focus indicated by the at least one focus parameter associated with the current video frame. One second focus associated with the current video frame may be different from any of the at least one first focus used for capturing the refocusable images data.

At block 240, data representing the at least one focus parameter associated with the current viewable video frame is written in the data file or the data stream.

A new current viewable video frame is considered and steps 230 and 240 iterates until all viewable video frames of the video are considered.

**Figure 3** shows a schematic block diagram of steps of a method 300 of deriving a two-dimensional image from refocusable images data, in accordance with at least one exemplary embodiment of the present disclosure.

At block 310, data representing the refocusable images data is read from a data file or a data stream, said refocusable images data being captured from an acquisition apparatus configured with at least one first focus.

At block 320, data representing at least one focus parameter is read from the data file or the data stream. The at least one focus parameter represents a second focus different from any focus of the at least first focus.

At block 330, the viewable two-dimensional image is derived from the refocusable images data with the second focus.

Optionally, at block 340, the derived viewable two-dimensional image is displayed on a two-dimensional viewing device.

**Figure 4** shows a schematic block diagram of steps of a method 400 of deriving a two-dimensional video from refocusable images data, in accordance with at least one exemplary embodiment of the present disclosure.

The viewable two-dimensional video comprises multiple viewable video frames that may be capable of or designed for viewing with different focuses indicated by different focus parameters.

At block 410, data representing the refocusable images data is read from a data file or a data stream, said refocusable images data being captured from an acquisition apparatus configured with at least one first focus.

At block 420, data representing at least one focus parameter associated with a current viewable video frame is read from the data file or the data stream. The at least one focus parameter indicates a second focus different from any focus of the at least one first focus.

At block 430, a viewable two-dimensional video frame is derived from the refocusable images data with the second focus.

Optionally, at block 440, the derived two-dimensional viewable video frame is displayed on the two-dimensional viewing device.

A new current viewable video frame is considered and steps 420 and 440 iterates until all viewable video frames of the video are considered.

In the context of standardisation, a specification (especially those on multimedia technologies such as MPEG's ones) generally clarifies the expected behaviour associated with a certain metadata. If present in a data file or a data stream, the at least one focus parameter may be a recommended focus parameter to use by an end-user application when displaying a viewable two-dimensional image or viewable video frame. However, the at least one focus parameter may also be limited to a recommendation. This means that an application may still decide to ignore the at least one recommended focus parameter, for instance in case the application allows the end-users to freely set the at least one focus parameter. For some other applications, on the contrary, it may not make sense to let the end-users set the focus parameters freely, in this case, the at least one recommended focus parameter will always be used.

Therefore, in the remainder of those embodiments, we will refer to the focus parameters as recommended focus parameters.

In one exemplary embodiment, the at least one first focus and the second focus may be based on a location of a focal plane and a depth of field.

In some embodiments, the at least one focus parameter may include a focus distance.

In some embodiments, the focus distance may be represented by a ratio of two values.

In some embodiments, the at least one focus parameter may include an aperture change of the acquisition apparatus in a number of stops.

In some embodiments, the aperture change may be represented by a ratio of two values.

Using at least one focus parameter to indicate a focus distance and an aperture change leads to an explicit signalling of a focus that produces the highest degree of consistency in the perceived viewable two-dimensional image by a viewer.

In some embodiments, the at least one focus parameter may indicate a focus area of the viewable two-dimensional image in which the content is sharp.

In some embodiments, the at least one focus parameter may indicate a focus point of the focus area of the viewable two-dimensional image. The content may then be sharp around this focus point in the limit of the focus area boundaries.

Using at least one focus parameter to indicate a focus area of the viewable two-dimensional image (or viewable video frame) is less precise than an explicit signalling of the location of the focal plane and the depth of field since it only captures the content creator intent to focus on a certain part of the viewable two-dimensional image (or viewable two-dimensional video frame) and let the image/video player to find the right focus configuration to fulfil the content creator's intent. However, indicating a focus area of the viewable two-dimensional image by at least one focus parameter is well suited for smartphone-based users which may produce content by taping in focus area of the viewable two-dimensional image (or the two-dimensional viewable video frame) they wish to make the focus on. The application merely has to store those focus areas in the file to record the content creator intent.

In some embodiments, the at least one focus parameter may indicate relative coordinates of the focus point to the dimension of the image.

In some embodiments, at least one focus parameter may indicate a focus distance and/or an aperture change in a number of stops and at least one other focus parameter may indicate a focus area of the viewable two-dimensional image.

For example, a content creation tool (at recording or after recording of refocusable images data) may store at least one focus parameter to indicate a focus area of the viewable two-dimensional image that may has been defined by a content creator. Then in a post processing step, the content creation tool may determine the at least one best focus parameter to indicate the focus area of the viewable two-dimensional image based on a focus distance and/or an aperture change in a number of stops indicated by at least one other focus parameter selected by an end-user for example. It may thus be interesting to store one or in some cases both sets of at least one focus parameters in the data file or data stream.

In some embodiments of methods 100 and 200, the refocusable images data and the at least one focus parameter may be written (encapsulated) in a formatted file (file-based container) for file storage or segment streaming or packet-based, e.g. RTP, for network transmission.

In some embodiments of methods 300 and 400, the refocusable images data and the at least one focus parameter may then be parsed (read) from the formatted file.

In the following, the formatted file is an ISOBMFF formatted file that conforms with the standard ISO/IEC 14496-12 or one of its derivatives.

To store the refocusable images data and the at least one focus parameter in a formatted file, it is important to consider whether the refocusable images data and the at least one focus parameter correspond to a static visual content (still images) or to a dynamic visual content (videos), that is whether it varies over time.

In some embodiments, when the second focus is static for the entire duration of the refocusable images data, the at least one parameter defining the second focus may be stored along other static metadata for the refocusable images data.

For example, the second focus may typically be static for refocusable images data corresponding to still images since there is no time dimension. For refocusable images data corresponding to video, this may also be the case although possibly rarer.

In some embodiments, when refocusable images data correspond to still images, the at least one focus parameters may be stored using a format derived from ISO/IEC 14496-12 such as the ISO/IEC 23008-12 High Efficiency Image File Format (HEIF) for example.

In some embodiments, when refocusable images data correspond to videos, any format derived from ISO/IEC 14496-12 may be used.

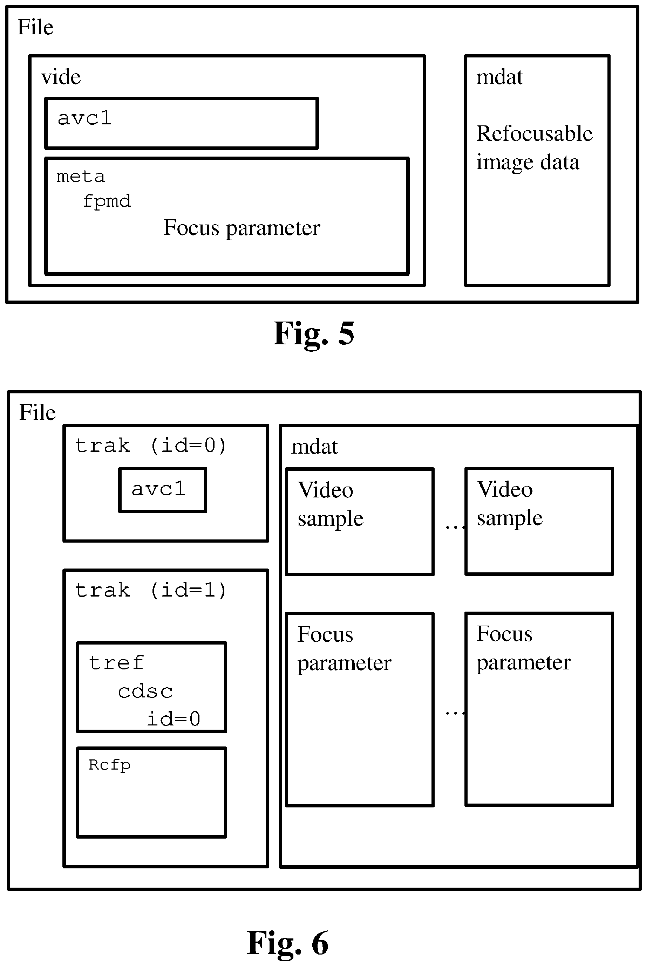

**Figure 5** shows schematically an overview of a ISOBMFF formatted file for storing the refocusable images data and the at least one focus parameter corresponding to static visual content in accordance with an exemplary embodiment.

The ISOBMFF formatted file of **Figure 5** may comprise a video track identified by a video handler 'vide' within a 'trak' box and may contain boxes which can be considered as metadata since they describe the content stored in the mdat box and how to access it. A codec of the video samples may be the H.264/AVC codec ('avc1'), and the encoding of the video samples follows the constraints defined by a 'avc1' sample entry. Note that the sample entry 'avc1' may be defined in the ISO/IEC 14496-15 standard.

The ISOBMFF formatted file may further comprise a media data box ('mdat') that comprises the encoded refocusable images data and possibly other encoded data if present.

The ISOBMFF formatted file further comprise a **MetaBox** (`meta') that comprises a specific box whose 4-byte code is 'fpmd' (for focus parameter meta data) to indicate a type of the at least one focus parameter and contains the at least one focus parameter.

In some embodiments, the focus distance (in meter) may be represented as the ratio of a first value **recommended_focus_distance_numerator** over a second value **recommended_focus_distance_denominator,** and the aperture change may be represented by a ratio of a first value **recommended_f_stop_numerator** over a second value **recommended_f_stop_denominator.** A syntax of this focus distance may be defined by a class **RecommendedFocusProperty** of Table 1 that derived from a class **ItemFullProperty** of ISOBMFF file format.

**Table 1**

| | | |
|---|---|---|
| aligned(8) class RecommendedFocusProperty | | |
| extends Item Full Property('rf pr', version = 0, flags = 0) { | | |
| | unsigned int(16) | recommended_focus_distance_numerator; |
| | unsigned int(16) | recommended_focus_distance_denominator; |
| | int(8) | recommended_f_stop_numerator; |
| | int(8) | recommended_f_stop_denominator; |
| } | | |

Focus at infinity is expressed as division by zero, i.e., **recommended_focus_distance_denominator** is equal to 0 and **recommended_focus_distance_numerator** should be equal to 0.

In some embodiments, when the at least one focus parameter may indicate a focus area of the viewable two-dimensional image in which the content is sharp, a syntax of the type of the at least one focus parameter may be defined by the class **RecommendedFocusProperty** of Table 2 that derived from a class **ItemFullProperty** of ISOBMFF Format.

**Table 2**

| | |
|---|---|
| aligned(8) class RecommendedFocusProperty | |
| extends Item Full Property('rf pr', version = 0, flags = 0) { | |
| | unsigned int(16) reference_width; |
| | unsigned int(16) reference_height; |
| | unsigned int(16) focus_point_x; |
| | unsigned int(16) focus_point_y; |
| } | |

The **reference_width** and **reference_height** values indicate respectively the reference width and reference height in which the horizontal and vertical position of the focus points, the **focus_point_x** and **focus_point_y** values , are expressed in. They indicate the horizontal and vertical coordinates of a focus point of the focus area of the viewable two-dimensional image. In effect, it provides the position of the focus point relatively to the dimension of the video frame. This allows then to associate the same metadata object with different video tracks of different image resolutions but representing the same visual content (still image or video frames).

This exemplary embodiment is advantageous because the focus point may be defined for frames (still images or video frames) from a same metadata independently of the dimensions (resolutions) of these frames. When frames of a same resolution are considered, it is obvious the focus point coordinates may be given in the coordinate system of the frames where the top left corner of the frames is (0,0) going positive right and bottom. Typical convention in MPEG standards. When the frames have different dimensions, the coordinates of the focus point may then be signaled for each of these resolutions even the focus point is located at a same location in these still images or the videos. For example, if the focus point (x,y) is located in the center of the frames, the focus point coordinates are (960,540) for a frame of dimension (1920,1080) and the focus coordinates are (640,360) for a frame of dimension (1280,720). According to the exemplary embodiment, the **reference_width** and **reference_height** values provide the position of the focus point relatively to the dimensions of the frames. For example, when the coordinates of the focus point are (0,0) for a frame of dimension (W1 ,H1) and the **reference_width** and **reference_height** values equal (W1/2,H1/2), the coordinates of the focus point of a frame of dimension (W2, H2) are given by W2=(**reference_width**/W1) *W2 and (**reference_height**/H1) * H2.

**Figure 6** shows schematically an overview of a ISOBMFF formatted file for storing the refocusable images data and the at least one focus parameter corresponding to dynamic visual content in accordance with an exemplary embodiment.

The ISOBMFF formatted file of **Figure 6** may comprise a first video track identified by a video handler `id=0'. A codec of the video samples may be the H.264/AVC codec ('avc1'), and the encoding of the video samples follows the constraints defined by a 'avc1' sample entry. Note that the sample entry 'avc1' may be defined in the ISO/IEC 14496-15 standard.

The ISOBMFF formatted file of **Figure 6** may further comprise a timed metadata track (id=1). A track reference box ('tref') defines a reference(cdsc) between the first video track (id=0) and the timed metadata track (id=1). The timed metadata track (id=1) provides the at least one focus parameter that should be used to display the video frames with when the at least one focus parameter changes over time, i.e. changes for each video frame. The timed metadata track (id=1) is linked to an associated video track via a 'cdsc' track reference. Both tracks shall be of the same duration. The timed metadata track (id=1) has a sample entry to identify the type of the at least one focus parameter. The syntax of this sample entry may be defined by a class **RecommendedFocusTimedMetadataSampleEntry** (4CC code 'rcfp') that derived from a class **MetaDataSampleEntry** of ISOBMFF file format:
class RecommendedFocusTimedMetadataSampleEntry() extends MetaDataSampleEntry ('rcfp') { }
When the sample entry 'rcfp' is present in a box Sample Description Box of the ISOBMFF formatted file which specifies the type of samples, it means that the type of the at least one focus parameter is stored in the timed metadata track (id=1).

In some embodiments, when the focus distance (in meter) may be represented as the ratio of a first value **recommended_focus_distance_numerator** over a second value **recommended_focus_distance_denominator,** and the aperture change may be represented by a ratio of a first value **recommended_f_stop_numerator** over a second value **recommended_f_stop_denominator,** the syntax the at least one focus parameter may be defined by the class **RecommendedFocusParameterSample** of Table 3.

**Table 3**

| | | |
|---|---|---|
| aligned(8) class RecommendedFocusParameterSample() { | | |
| | unsigned int(16) | recommended_focus_distance_numerator; |
| | unsigned int(16) | recommended_focus_distance_denominator; |
| | int(8) | recommended_f_stop_numerator; |
| | int(8) | recommended_f_stop_denominator; |
| } | | |

In some embodiments, when the at least one focus parameter may indicate a focus point of the viewable two-dimensional image in which the content is sharp, the timed metadata track (id=1) may comprise a sample entry to identify the type of the at least one focus parameter. The syntax of this sample entry may be defined by the class **RecommendedFocusTimedMetadataSampleEntry** of Table 4 (sample entry 'rcfp').

**Table 4**

| | |
|---|---|
| class RecommendedFocusTimedMetadataSampleEntry() extends | |
| MetaDataSampleEntry ('rcfp') { | |
| | unsigned int(16) reference_width; |
| | unsigned int(16) reference_height; |
| } | |

When the sample entry 'rcfp' is present in a box Sample Description Box of the ISOBMFF formatted file which specifies the type of samples, i.e. the type of the at least one focus parameter is stored in the timed metadata track (id=1), the class **RecommendedFocusParameterSample** is given in Table 5

**Table 5**

| | |
|---|---|
| class Recommended Focus ParameterSample () { | |
| | unsigned int(16) reference_width; |
| | unsigned int(16) reference_height; |
| | unsigned int(16) focus_point_x; |
| | unsigned int(16) focus_point_y; |
| } | |

The **reference_width, reference_height, focus_point x** and **focus_point_y** have same definition as those of Table 2. These values allow associating a metadata track 'mdat' with video tracks of different resolutions but representing the same visual content (still image or video frames).

When the recording of new focus parameters occurs while recording the refocusable images data, a new position in the images may indicate a new focus point. This may introduce some delay between the time instant of defining this position and the recording of at least one new focus parameter corresponding to this new position because the at least one new corresponding focus parameter that makes this new focus in the sharp area in the image. Indeed, one way to determine said at least one new focus parameter is to scan the range of possible focus distances and aperture values, until the focus point where the target focus area contains high frequencies and few low frequencies, i.e., provides a sharp image. Note that this is a typical method on current phones to set the focus by allowing the user to tap an area. One can notice that the camera sort of scans possible values and then stops when the parameters give a sharp picture on this area. This scanning method may thus introduce "garbage" focus parameters in the recorded metadata until the appropriate parameters are found. An application may thus decide to not store them during the scanning process and only record them when stable. Another option is to store the at least one current focus parameter for all the video frames but label the focus parameter sample with a property to allow the video player not to use those focus parameter samples since they are merely for the purpose of scanning and usually produce an unpleasant effect if applied.

To this end, in one exemplary embodiment, the viewable two-dimensional image being a video frame of a video, and wherein an additional parameter **focus_state** is written/read in/from the data file or the data stream, the additional parameter indicating whether the at least one focus parameter associated with a video frame of the video is to be used or not to indicate the second focus.

In some embodiments, when the focus distance (in meter) may be represented as the ratio of a first value **recommended_focus_distance_numerator** over a second value **recommended_focus_distance_denominator,** and the aperture change may be represented by a ratio of a first value **recommended_f_stop_numerator** over a second value **recommended_f_stop_denominator,** the syntax of the type of the at least one focus parameter may be defined by the class **RecommendedFocusParameterSample** of Table 6.

**Table 6**

| | | |
|---|---|---|
| class RecommendedFocusParameterSample() { | | |
| | unsigned int(16) | recommended_focus_distance_numerator; |
| | unsigned int(16) | recommended_focus_distance_denominator; |
| | int(8) | recommended_f_stop_numerator; |
| | int(8) | recommended_f_stop_denominator; |
| | unsigned int(3) | focus_state; |
| | unsigned int(5) | reserved; |
| } | | |

For example, the values of the parameter **focus_state** indicate:
- 0: the at least one focus parameter is stable and can be used by an application;
- 1: the at least one focus parameter is unstable and should not be used by an application;
- 2: the at least one focus parameter is still scanning and may be used by an application.
- 3-8: unspecified reserved values

In one exemplary embodiment, an additional parameter **interpolate** is written/read in/from the data file or data stream to indicate the at least one focus parameter indicating the second focus used to derive the viewable two-dimensional image is derived by interpolation at least one focus parameter indicating a focus used to derive another viewable two-dimensional image.

This exemplary embodiment is advantageous to no write/read every focus parameter for every time instant (e.g., every video frame of a video) but instead a parameter **interpolate** to indicate interpolation of the at least one focus parameter between two focus parameter samples of the timed metadata track (id=1). This may be useful for artistic reason or to save on the total size of the at least one focus parameter over time.

In some embodiments, when the focus distance (in meter) may be represented as the ratio of a first value **recommended_focus_distance_numerator** over a second value **recommended_focus_distance_denominator,** and the aperture change may be represented by a ratio of a first value **recommended_f_stop_numerator** over a second value **recommended_f_stop_denominator,** the syntax of the type of the at least one focus parameter may be defined by the class **RecommendedFocusParameterSample** of Table 7.

**Table 7**

| | | |
|---|---|---|
| class Recommended Focus ParameterSample () { | | |
| | unsigned int(16) | recommended_focus_distance_numerator; |
| | unsigned int(16) | recommended_focus_distance_denominator; |
| | int(8) | recommended_f_stop_numerator; |
| | int(8) | recommended_f_stop_denominator; |
| | unsigned int(3) | focus_state; |
| | unsigned int(1) | interpolate; |
| | unsigned int(4) | reserved; |
| } | | |

For example, the parameter **interpolate** indicates the continuity in time of the successive focus parameter samples. When true, an application may linearly interpolate values of the at least one focus parameter between the previous focus parameter sample and the current focus parameter sample. When false, there shall not be any interpolation of values between the previous and the current focus parameter samples.

In yet another embodiment, the interpolation method may also be signalled explicitly.

For example, the syntax of the type of the at least one focus parameter may be defined by the class **RecommendedFocusParameterSample** of Table 8.

**Table 8**

| | | | | |
|---|---|---|---|---|
| class RecommendedFocusParameterSample() { | | | | |
| | unsigned int(16) | | recommended_focus_distance_numerator; | |
| | unsigned int(16) | | recommended_focus_distance_denominator; | |
| | int(8) | | recommended_f_stop_numerator; | |
| | int(8) | | recommended_f_stop_denominator; | |
| | unsigned int(3) | | focus_state; | |
| | unsigned int(1) | | interpolate; | |
| | unsigned int(4) | | reserved; | |
| | if(interpolate == 1) | | | { |
| | | unsigned int(3) | | interpolation_method; |
| | | unsigned int(5) | | reserved; |
| | | // more parameters to be defined based on the interpolation method | | |
| | } | | | |
| } | | | | |

For example, the parameter **interpolation_mode** indicates a method to use to interpolate the at least one focus parameters.

For example, the parameter **interpolation_mode** equals:
- 0: to indicate a linear interpolation
- 1: to indicate a polynmomial interpolation
- 2: to indicate a spline interpolation

Note that in the above text we do not include more interpolation methods. Also, for brevity, the method specific parameters, e.g. the coefficients for polynomial interpolation, are not represented in the class **RecommendedFocusParameterSample** above but would be added in practice for each method that would require some.

The methods 100 to 400 are all targeting file formats. Another approach is to embed the recommended focus parameters in video stream metadata, within the video coded data and regardless of file and transport encapsulation.

In some embodiments, the at least one focus parameter may be stored in a supplemental enhancement information (SEI) message **recommended_focus_parameter** of a data stream according to video coding standards of the MPEG/ITU family which are AVC, HEVC, EVC and VVC.

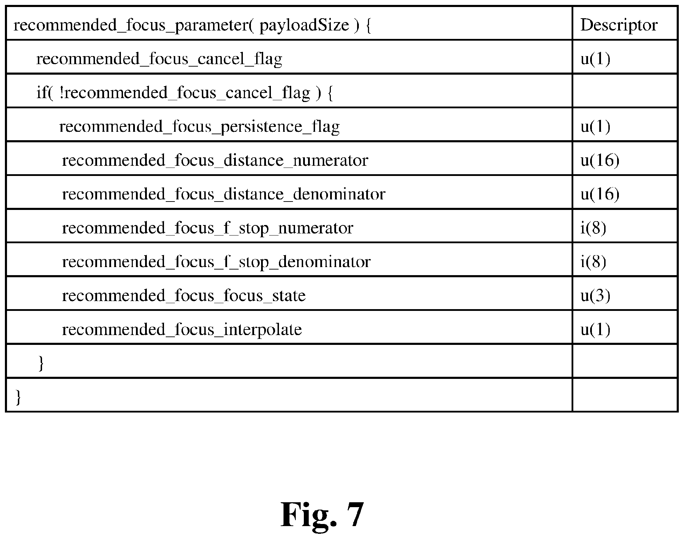

**Figure 7** shows schematically a payload of a **recommended_focus_parameter** SEI message carrying at least one focus parameter in accordance with an exemplary embodiment.

The **recommended_focus_parameter** SEI message specifies the at least one focus parameter associated with an image (video frame) it applies to.

The flag **recommended_focus_cancel_flag** equals 1 to indicate that the SEI message cancels the persistence of any previous **recommended_focus_parameter** SEI message in output order. The flag **recommended_focus_cancel_flag** equals 0 otherwise.

The flag **recommended_focus_persistence_flag** specifies the persistence of the **recommended_focus_parameter** SEI message.

The flag **recommended_focus_persistence_flag** equals 0 to specify that the **recommended_focus_parameter** SEI message applies to the current image (video frame) only.

The flag **recommended_focus_persistence_flag** equals 1 to specify that the **recommended_focus_parameter** SEI message applies to the current image (video frame) and persists for all subsequent images (video frames) in output order until one or more of the following conditions are true:
- A new CLVS (Coded Layer Video Sequence) of the current layer begins.
- The bitstream ends.
- An image (video frame) in the current layer in an AU (Access Unit) associated with a **recommended_focus_parameter** SEI message is output that follows the current image (video frame) in output order.

The focus distance is expressed in meter as the ratio of **recommended_focus_distance_numerator** and **recommended_focus_distance_denominator.** Focus at infinity is expressed as division by zero, i.e. **recommended_focus_distance_denominator** is equal to 0 and **recommended_focus_distance_numerator** should be equal to 0.

The depth of field is expressed as an aperture change in a number of stops and is computed as the ratio of a first value **recommended_focus_f_stop_numerator** over a second value **recommended_focus_f_stop_denominator.**

The parameter **recommended_focus_interpolate** indicates the continuity in time of the successive video samples. When true, an application may linearly interpolate values of the at least one focus parameter between the previous video sample and the current video sample. When false, there shall not be any interpolation of values between the previous and the current video samples.

For example, the parameter **recommended_focus_focus_state** indicates equals:
- 0: to indicate the at least one focus parameter is stable and can be used by an application;
- 1: to indicate the at least one focus parameter is unstable and should not be used by an application;
- 2: to indicate the at least one focus parameter is still scanning and may be used by an application.
- 3-8: unspecified reserved values

Embodiments of the present disclosure generally relate to methods of storing data representing refocusable images data captured from an acquisition apparatus configured to capture the refocusable images data with at least one first focus as discussed above in relation with **Figures 1** and **2** and relates to methods of deriving a viewable two-dimensional image from the refocusable images data with a second focus different from any focus of the at least first focus as discussed in relation with **Figures 3** and **4****.**

Further embodiments may also relate to a method for changing the focus of an image that may be performed by an apparatus. The method may obtain at least two images (or obtaining data representing the at least two images), each of the at least two images is captured with a first focus; may detect an operation indicating a second focus different from the at least one fist focus; for example the operation is detected by the apparatus, for example on an action on a screen of the apparatus; displaying one of the at least two images with the second focus, wherein the range of values of second focus is determined by at least two first focus or the range of values for the second focus is between the minimum and maximum values of at least two first focuses.

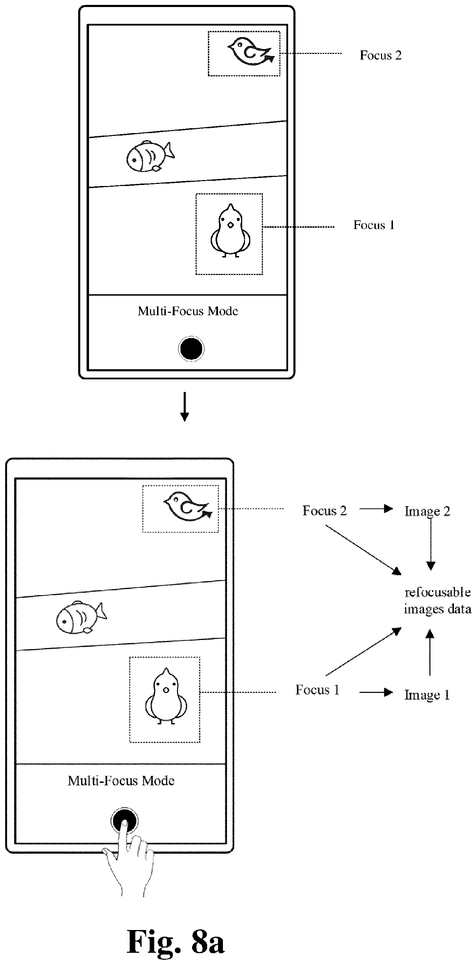

**Figure 8a****-d** shows an example of a use case and user interface using the present disclosure in accordance with an exemplary embodiment.

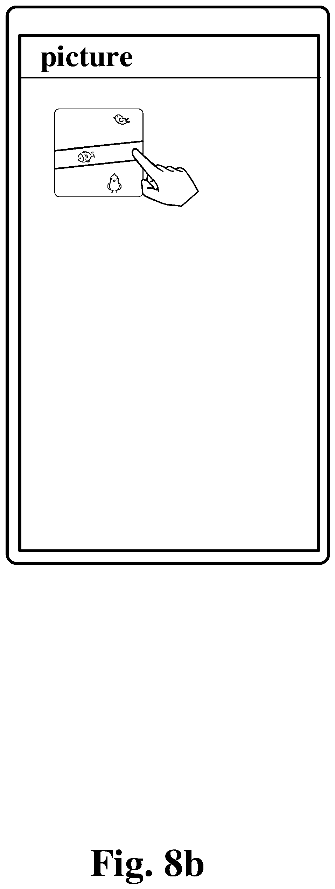

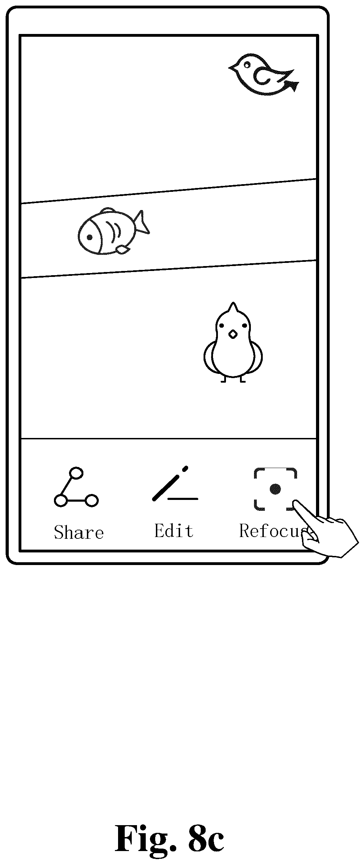

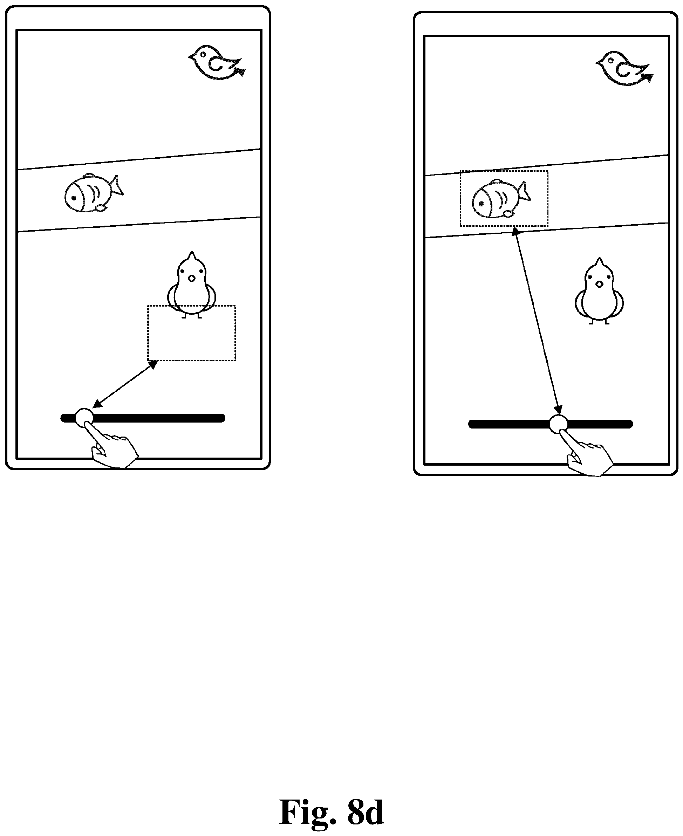

In this example, the present disclosure is implemented in a smartphone implements as an application comprising a multi-focus mode. The application captures a first image 1 with a first focus 1 and a second image 2 with a focus 2 (**Figure 8a**). Refocusable images data is then obtained for example by combining the first and second images. The refocusable images data is stored in a memory of the smartphone. An end-user may then launch the multi-focus mode from a user interface. For example, the end-user may click on an area of the tactile screen of the smartphone as shown in **Figure 8A****.** An image template of the refocusable images data may be displayed on the screen as shown in **Figure 8b****.** The end-user may then select from the user interface a third focus on the displayed image. For example, the end-user may click on a area 'refocus' of the screen of the smartphone as shown in **Figure 8c****.** A slide bar may then be displayed on the screen and the end-user may then select a focus area by moving a cursor of the slide bar as shown in **Figure 8d****.** The third focus is determined based on the selected focus area. The third focus belongs to a range values determined by the first focus 1 and the second focus 2. The application may then calculate an image with the third focus based on the refocusable images data for example by using the Pitts' method as discussed above. The calculated image is then displayed on the screen.

**Figures 8a****-d** provide an example of use case and user interface for illustrative purpose. The present disclosure may be uses for other use cases and other user interfaces.

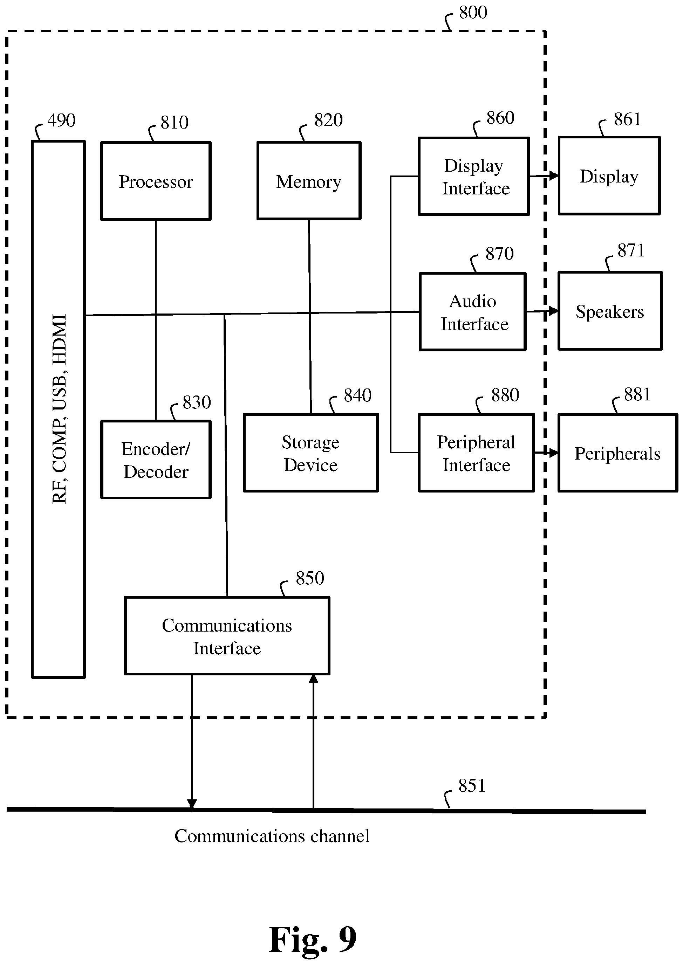

**Figure 9** shows a schematic block diagram illustrating an example of a system 800 in which various aspects and exemplary embodiments are implemented.

System 800 may be embedded as one or more devices including the various components described below. In various exemplary embodiments, system 800 may be configured to implement one or more of the aspects described in the present disclosure.

Examples of equipment that may form all or part of the system 800 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 800, singly or in combination, may be embodied in a single integrated circuit (IC), multiple ICs, and/or discrete components. For example, in at least one exemplary embodiment, the processing and encoder/decoder elements of system 800 may be distributed across multiple ICs and/or discrete components. In various exemplary embodiments, system 800 may be communicatively coupled to other similar systems, or to other electronic devices, via, for example, a communications bus or through dedicated input and/or output ports.

System 800 may include at least one processor 810 configured to execute instructions loaded therein for implementing, for example, the various aspects described in the present disclosure. Processor 810 may include embedded memory, input output interface, and various other circuitries as known in the art. System 800 may include at least one memory 820 (for example a volatile memory device and/or a non-volatile memory device). System 800 may include a storage device 840, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 840 may include an internal storage device, an attached storage device, and/or a network accessible storage device, as non-limiting examples.

System 800 may include an encoder/decoder module 830 configured, for example, to process data to provide encoded/decoded video picture data, and the encoder/decoder module 830 may include its own processor and memory. The encoder/decoder module 830 may represent module(s) that may be included in a device to perform the encoding and/or decoding functions. As is known, a device may include one or both encoding and decoding modules. Additionally, encoder/decoder module 830 may be implemented as a separate element of system 800 or may be incorporated within processor 810 as a combination of hardware and software as known to those skilled in the art.

Program code to be loaded onto processor 810 or encoder/decoder 830 to perform the various aspects described in the present disclosure may be stored in storage device 840 and subsequently loaded onto memory 820 for execution by processor 810. In accordance with various exemplary embodiments, one or more of processor 810, memory 820, storage device 840, and encoder/decoder module 830 may store one or more of various items during the performance of the processes described in the present disclosure. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 810 and/or the encoder/decoder module 830 may be used to store instructions and to provide working memory for processing that may be performed during encoding or decoding.

In other exemplary embodiments, however, a memory external to the processing device (for example, the processing device may be either the processor 810 or the encoder/decoder module 830) may be used for one or more of these functions. The external memory may be the memory 820 and/or the storage device 840, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 800 may be provided through various input devices as indicated in block 890. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present disclosure is implemented in the automotive domain.

In various exemplary embodiments, the input devices of block 890 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 800 to other electronic devices across USB and/or HDMI connections. It is to be understood that various aspects of input processing, for example, Reed-Solomon error correction, may be implemented, for example, within a separate input processing IC or within processor 810 as necessary. Similarly, aspects of USB or HDMI interface processing may be implemented within separate interface ICs or within processor 810 as necessary. The demodulated, error corrected, and demultiplexed stream may be provided to various processing elements, including, for example, processor 810, and encoder/decoder 830 operating in combination with the memory and storage elements to process the data stream as necessary for presentation on an output device.

Various elements of system 800 may be provided within an integrated housing. Within the integrated housing, the various elements may be interconnected and transmit data therebetween using suitable connection arrangement 890, for example, an internal bus as known in the art, including the I2C bus, wiring, and printed circuit boards.

The system 800 may include communication interface 850 that enables communication with other devices via communication channel 851. The communication interface 850 may include, but is not limited to, a transceiver configured to transmit and to receive data over communication channel 851. The communication interface 850 may include, but is not limited to, a modem or network card and the communication channel 851 may be implemented, for example, within a wired and/or a wireless medium.

Data may be streamed to system 800, in various exemplary embodiments, using a Wi-Fi network such as IEEE 802.11. The Wi-Fi signal of these exemplary embodiments may be received over the communications channel 851 and the communications interface 850 which are adapted for Wi-Fi communications. The communications channel 851 of these exemplary embodiments may be typically connected to an access point or router that provides access to outside networks including the Internet for allowing streaming applications and other over-the-top communications.

Other exemplary embodiments may provide streamed data to the system 800 using a set-top box that delivers the data over the HDMI connection of the input block '90.

Still other exemplary embodiments may provide streamed data to the system 800 using the RF connection of the input block 890.

The streamed data may be used as a way for signaling information used by the system 800. The signaling information may comprise a bitstream and/or information such a number of pixels of a video picture, any coding/decoding setup parameters, an alignment status, alignment reference data, overlap status, resampling data, interpolation data, and/or calibration data.

It is to be appreciated that signaling may be accomplished in a variety of ways. For example, one or more syntax elements, flags, and so forth may be used to signal information to a corresponding decoder in various exemplary embodiments.

System 800 may provide an output signal to various output devices, including a display 861, speakers 871, and other peripheral devices 881. The other peripheral devices 881 may include, in various examples of exemplary embodiments, one or more of a stand-alone DVR, a disk player, a stereo system, a lighting system, and other devices that provide a function based on the output of system 800.

In various exemplary embodiments, control signals may be communicated between the system '00 and the display 861, speakers 871, or other peripheral devices 881 using signaling such as AV.Link (Audio/Video Link), CEC (Consumer Electronics Control), or other communications protocols that enable device-to-device control with or without user intervention.

The output devices may be communicatively coupled to system 800 via dedicated connections through respective interfaces 860, 870, and 880.

Alternatively, the output devices may be connected to system 800 using the communications channel 851 via the communications interface 850. The display 861 and speakers 871 may be integrated in a single unit with the other components of system 800 in an electronic device such as, for example, a television.

In various exemplary embodiments, the display interface 860 may include a display driver, such as, for example, a timing controller (T Con) chip.

The display 861 and speaker 871 may alternatively be separate from one or more of the other components, for example, if the RF portion of input 890 is part of a separate set-top box. In various exemplary embodiments in which the display 861 and speakers 871 may be external components, the output signal may be provided via dedicated output connections, including, for example, HDMI ports, USB ports, or COMP outputs.

In **Figures 1-8****,** various methods are described herein, and each of the methods includes one or more steps or actions for achieving the described methods. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device.

Processors also include communication devices.

Additionally, the methods may be implemented by instructions being performed by a processor, and such instructions (and/or data values produced by an implementation) may be stored on a computer readable storage medium, such as storage device 840 (**Figure 9**) for instance. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 810 or by hardware, or by a combination of hardware and software. As a non-limiting example, the exemplary embodiments may be also implemented by one or more integrated circuits. The memory 820 may be of any type appropriate to the technical environment and may be implemented using any appropriate data storage technology, such as optical memory devices, magnetic memory devices, semiconductor-based memory devices, fixed memory, and removable memory, as non-limiting examples. The processor 810 may be of any type appropriate to the technical environment, and may encompass one or more of microprocessors, general purpose computers, special purpose computers, and processors based on a multi-core architecture, as non-limiting examples.

As will be apparent to one of ordinary skill in the art based on the present disclosure, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present disclosure. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present disclosure. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout the present disclosure are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present disclosure are not necessarily all referring to the same exemplary embodiment/example/implementation, nor are separate or alternative exemplary embodiments/examples/implementations necessarily mutually exclusive of other exemplary embodiments/examples/implementations.

Reference numerals appearing in the claims are by way of illustration only and shall have no limiting effect on the scope of the claims. Although not explicitly described, the present exemplary embodiments/examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this disclosure, may encompass all or part of the processes performed, for example, on a received video sequence (including possibly a received bitstream which encodes one or more video sequences) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present disclosure.

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present disclosure may encompass all or part of the processes performed, for example, on an input video sequence in order to produce an output bitstream. In various exemplary embodiments, such processes include one or more of the processes typically performed by an encoder. In various exemplary embodiments, such processes also, or alternatively, include processes performed by an encoder of various implementations described in this disclosure.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present disclosure may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this disclosure may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this disclosure.

## Claims

1. A method (100, 200) of storing data representing an image in a data file or in a data stream, comprising:
- obtaining refocusable images data captured from an acquisition apparatus configured to capture the refocusable images data with at least one first focus, the image being derived from the captured refocusable images data with a second focus different from any focus of the at least one first focus ;
- writing data representing the refocusable images data in the data file or the data stream ;
- obtaining at least one focus parameter indicating the second focus;
- writing in the data file or the data stream, data representing the at least one focus parameter.

2. A method (300, 400) of deriving an image from refocusable images data, the method comprising:
- reading data representing the refocusable images data from a data file or a data stream, said refocusable images data being captured from an acquisition apparatus configured with a at least one first focus ;
- reading from the data file or the data stream, data representing at least one focus parameter indicating a second focus different from any focus of the at least one first focus ;
- deriving the image from the refocusable images data with the second focus.

3. The method of claim 1 or 2, wherein the at least one first focus and the second focus are based on a location of a focal plane and a depth of field.

4. The method of claim 3, wherein the at least one focus parameter includes a focus distance.

5. The method of claim 3 or 4, wherein the at least one focus parameter includes an aperture change of acquisition apparatus in a number of stops, said aperture change being represented by a ratio of two values.

6. The method of one of claims 1 to 5, wherein the at least one focus parameter indicates a focus area of the image.

7. The method of claim 6, wherein the at least one focus parameter indicates a focus point of the focus area of the image.

8. The method of claim 7, wherein the at least one focus parameter indicates relative coordinates of the focus point to the dimension of the image.

9. The method of one of claims 1 to 8, wherein the image being a video frame of a video, and an additional parameter is written/read in/from the data file or the data stream, the additional parameter indicating whether the at least one focus parameter associated with a video frame of the video is to be used or not to indicate the second focus.

10. The method of claim 1 or 2, wherein the image being a video frame of a video, and wherein an additional parameter is written/read in/from the data file or data stream to indicate the at least one focus parameter indicating the second focus used to derive the image is derived by interpolation at least one focus parameter indicating a focus used to derive another image.

11. A data file or a data stream formatted to include refocusable images data and at least one focus parameter indicating a focus obtained from a method of one of claims 1, 3 to 10.

12. The data file of claim 11, wherein the data file is a ISOBMFF formatted file that conforms to the standard ISO/IEC 14496-12 or one of its derivatives.

13. The data file of claim 11, wherein the data file is a video bitstream which comprises a supplemental enhancement information message.

14. A system comprising means for performing one of the method of any one of claims 1 to 11.

15. A computer program product including instructions which, when the program is executed by one or more processors, causes the one or more processors to carry out a method claimed in any one of claims 1 to 11.
